# EUROPEAN PATENT SPECIFICATION

(11) **EP 3 607 648 B1**
(45) Date of publication and mention of the grant of the patent: **07.07.2021**
(21) Application number: 18727421.2
(22) Date of filing: 04.04.2018
(51) Int. Cl.: H02P 6/08

(54) **CONTROL SYSTEM FOR A VEHICLE**
STEUERUNGSSYSTEM FÜR EIN FAHRZEUG
SYSTÈME DE COMMANDE DE VÉHICULE

(30) Priority: 05.04.2017 IN 201741012185
(43) Date of publication of application: 12.02.2020
(73) Proprietor: TVS Motor Company Limited, Chennai 600006 (IN)
(72) Inventor: RAGHUNATH KUMAR RACHABATTUNI, Venkata, Chennai 600 006 (IN); JABEZ DHINAGAR, Samraj, Chennai 600 006 (IN)
(74) Representative: Patentanwaltskanzlei Matschnig & Forsthuber OG
(86) International application number: PCT/IB2018/052312
(87) International publication number: WO 2018/185668

(56) References cited:
- EP-A1- 2 546 972
- EP-A2- 2 031 749
- EP-A2- 2 523 343
- JP-A- 2009 194 977

## Description

### TECHNICAL FIELD

The present invention relates an electric machine of a vehicle, and more particularly, the present invention relates to a controller for the electric machine of a vehicle.

### BACKGROUND

An electric machine is usually composed of stator and rotor. Generally, for a BLDC machine having a star winding configuration, and the controller used for such machines are also equipped with six power electronic switches that control the current through three phases of the machine, in such a manner that the current flows through two phases at any instance. The switches are so arranged that two of the switches are connected in series between the power supply and three such configurations are repeated. Further, the middle portion of each configuration is connected to the phase ends of the star winding configuration.

This results in six stable positions for the magnetic field causing six ripples in a torque waveform for one complete mechanical revolution of the rotor. The ripples have a negative effect on the average torque, which further reduces the available load torque that can be applied to the load. Thus, in such machines, for meeting the load-torque requirements the overall size of the machine is generally larger, which could impede the placement of the machine in a vehicle, more particularly, on small sized vehicles such as a two-wheeler or three wheeler. EP 2 031 749 A2 discloses a rotary electric machine for a vehicle. EP 2 523 343 A2 discloses a control apparatus controlling rotary electric machine. JP 2009 194977 A discloses a motor-integrated magnetic bearing device to suppress heat generation from a motor rotor. EP 2 546 972 A1 discloses a power semiconductor module.

Therefore, there is a need to provide a compact sized machine, which can deliver more average torque for meeting the load-torque requirements of the vehicle. This problem is solved by a control system according to claim 1.

### BRIEF DESCRIPTION OF THE DRAWINGS

The detailed description is described with reference to the accompanying figures. The same numbers are used throughout the drawings to reference like features and components.
**Fig. 1** illustrates a left side view of an exemplary two-wheeled vehicle, in accordance with an embodiment of the present subject matter.
**Fig. 2** illustrates a typical cross section of an electric machine in accordance to an embodiment of the present invention.
**Fig. 3** depicts a block diagram of a control system for assisting an internal combustion engine of a vehicle during starting and during high speed operations in accordance to an embodiment of the present invention.
**Fig. 4** illustrates a provides phase diagram representation of three of the six possible states of the switches of a three-phase switching network of power electronic switches, in accordance to an embodiment of the present invention.
**Fig. 5** illustrates the six-switch network of power electronic switches depicted in Fig. 4, which results in switching of the three-phase electric machine depicted in Fig.2.
**Fig.6** provides the phase diagram representation of the six possible states of the switches of the three-phase switching network of power electronic switches, in accordance to an embodiment of the present invention.
**Fig.7** illustrates the six-switch network of power electronic switches having an additional leg of switches that is electrically connected to the neutral point of the coils of the star winding of the electric machine depicted in Fig.2.
**Fig.8** depicts a torque waveform of a conventional electric machine connected in accordance with the network shown in Fig. 5.
**Fig. 9** depicts a torque waveform of the inventive electric machine connected in accordance with the network depicted in Fig.7.

### DETAILED DESCRIPTION

The present invention describes a machine which is beyond ISG in terms of functionality. This invention is also designed to provide assistance to the engine under high load conditions at high speed so that vehicle and engine operation can be performed to reduce CO2 and NOx emissions.

Further, the present invention can be realized with the help of multiple machine topologies, such as Induction machine, switched reluctance machine (SRM), and BLDC (brush less direct current) machine. Induction and switched reluctance machines are operated with corresponding power electronic controllers that regulate the torque based on the input conditions such as present speed of rotation.

While induction machine and SRM do not have, the speed limited by induced back-emf (electro motive force), BLDCDs speed range suffers due to this induced voltage. This is the voltage induced in the winding coils due to the rate of change of flux in the coils caused by presence of rotating magnets. This voltage limits the current flow into the machine, limiting the possible torque at speeds above zero depending on the supplied voltage.

When a machine is designed for starting and power assist operations, requirements are conflicting. Starting requires high torque constant, and power assist requires high speed/power operation and in turn low torque constant.

The present invention provides a BLDC machine and a controller for the BLDC machine having eight power electronic switches with the switches arranged in a manner that two of the switches, with one in top and one in bottom are connected in series between the power supply and four such configurations are repeated. Further, the middle portions of the first three configurations are connected to the phase ends of the star winding configuration, while the middle portion of the fourth configuration is connected to the neutral point of the star winding configuration.

Further, each of the switches is operated by a microcontroller individually through power electronic switching circuits. Each of the switches is composed of parallel combination of multiple power electronic switching circuit elements.

The conventional BLDC machine and its controller provided with three configurations having six switches, when operated in a predetermined sequence, in which the switches from two different configurations are operated wherein one of the switch is a top switch and the other is a bottom switch, a rotating magnetic field is established in the stator of the BLDC machine. Generally, the rotating magnetic field causes the rotor to follow the magnetic field for establishing the rotational motion of the rotor.

In such BLDC machines, the rotating magnetic field is created in steps of 60° electrical angle, which results in rotor torque selected as a combination of 60° of the torque versus angle waveform, which has a peak torque resulting in six repeated torque waveforms. This will have six torque ripples within 360° electrical rotation of the rotor. The average torque of the rotor is generally the mean of the peak torque and the lowest torque of the output torque waveform. In such a case, the average torque of the rotor is lower than the peak torque, which results in machine meeting only lower load torque requirements.

Hence, in the present invention, an dedicated switch configuration as a fourth switch configuration is implemented such that the middle portion of the fourth configuration is connected to the neutral point of the star winding configuration of the machine. By such a configuration, the present invention achieves a possible switch configuration that can result in finer steps of less than 60° electrical angle, for instance, of 30° electrical angle of the rotating magnetic field.

For example, in an embodiment, the present invention involves turning on the top switch of the first switch configuration and the bottom switch of the fourth switch configuration to result in a current flow through only one of the phases, for the first 30° electrical angle of the rotating magnetic field. For the next 30° electrical angle of the rotating magnetic field, the top switch of the first switch configuration and the bottom switch of the second switch configuration are turned on resulting in a current flow through two of the phases of the stator winding. Similarly, 30° angle steps of the rotating magnetic field can be achieved. By this configuration, it is possible to increase the lowest torque of the output torque waveform, which in turn increases the average torque of the rotor and still keeping the peak torque same. In such a case, with the higher average torque, it is possible for the BLDC machine to meet higher load torque requirements.

In an implementation, the resulting phase of the magnetic field in the airgap of the electric machine is rotated by 30°in each step. Correspondingly more number of Hall Effect sensors may be placed on the stator of the electric machine to detect the 30° revolution of the rotor. In another embodiment, the position of the rotor is predicted based on the previously known position of the rotor and the calculated speed, resulting from the traditional three Hall Effect sensors that are mounted on the stator.

The current limit of the controller during the times when only one of the phases is switching is increased such that the peak amplitude of the resulting magnetic field will be maintained same.

In an embodiment, the present invention enables to achieve BLDC machine of compact size and less weight, enabling it to be fitted in a small size vehicle. Further, the present invention also helps in achieving higher average torque enabling the machine to meet higher load torque requirements of the vehicle. For BLDC machines that are designed for high speed motoring operations, the starting torque is generally lower. However, the present invention provides a BLDC machine that is configured to achieve higher starting torque that can meet the vehicle 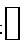 s startability requirements, for example, the startability requirement of an powertrain e.g. an internal combustion engine of the vehicle, in addition to catering the high-speed motoring operations.

In one of the embodiment, the proposed electric machine is used to assist the rotation of crankshaft of the internal combustion engine, with the peak torque at operating current being limited to about 50Nm both during starting of the vehicle and during providing power assistance to the internal combustion engine during running of the vehicle. Further, the peak torque at operating current of the electric machine of the present invention is less than the operational requirement of a traction motor of a hybrid and/or electric vehicle.

In an embodiment, the present subject matter provides a control system for assisting an internal combustion engine of a vehicle during starting and during high speed operations and achieving higher average torque. The control system of the present invention is provided with an electric machine that is compact and capable of being accommodated in a small vehicle and a power source. The control system is also capable of achieving reduction in exhaust emissions at high speed operations.

In an embodiment, the control system of the present invention comprises the electric machine of BLDC type. The electric machine includes a stator having a plurality of teeth, each tooth of said plurality of teeth is wound with conducting wire to form a winding connected in a star winding configuration. The electric machine including a rotor having a plurality of permanent magnets that are arranged facing the plurality of teeth of said stator.

In an embodiment, the control system of the present invention comprises a machine controller including at least one microcontroller. The machine controller includes a first set of switch configuration having six switches arranged in first, second, and third switch configurations, wherein said first, second, and third switch configurations include two switches connected in series between terminals of said power source respectively. The first set includes three top switches and three bottom switches, wherein a first junction portion of each of said two switches that are connected in series is connected to a connector end of a first phase of said star winding configuration. A second junction portion of each of said two switches that are connected in series is connected to a connector end of a second phase of said star winding configuration is provided. A third junction portion of each of said two switches that are connected in series is connected to a connector end of a third phase of said star winding configuration. The machine controller including a second set of switch configuration arranged in a fourth switch configuration having two switches connected in series between the terminals of said power source, said second set includes a fourth junction portion connected to a neutral point of said star winding configuration.

In an embodiment, the control system includes at least one microcontroller which turns ON a switch configuration of predetermined sequence resulting in a 30° electrical angle steps of a rotating magnetic field.

Further, in an embodiment, the control system is provided with the at least one microcontroller, which turns on the top switch of the first switch configuration and the bottom switch of the fourth switch configuration causing a current flow through said first phase for a first 30° electrical angle of the rotating magnetic field. The at least one microcontroller turns on the top switch of the first switch configuration and the bottom switch of the second switch configuration causing a current flow through said first phase and said second phase for a second 30° electrical angle of the rotating magnetic field.

Further, in an embodiment, the at least one microcontroller causes 30° angle steps of the rotating magnetic field by turning ON the first set and the second set of the switch configurations in a predetermined sequence.

In an implementation, the plurality of permanent magnets of said BLDC electric machine are mounted on a surface of said rotor facing said stator. In an alternative implementation, the plurality of permanent magnets of said BLDC electric machine are embedded inside said rotor.

Further, in an implementation, the electric machine is a brushless direct current motor having said rotor disposed inside said stator. In another implementation, the electric machine is a brushless direct current motor having said rotor disposed outside said stator.

In an embodiment, the first set and said second set of switch configurations are composed of parallel combination of multiple power electronic switching circuit elements. In one embodiment, the power source for supplying energy to said electric machine when said electric machine is operating as a motor, and for storing energy in a power source , generated by said electric machine when said electric machine is operating as a generator.

In an implementation, the control system comprises one or more sensors capable of sensing an operational position of said rotor. In one embodiment, the rotor is capable of rotating by interacting with a magnetic field produced by the stator upon receiving electrical energy from at least one energy storage device, said rotor separated from said stator by an air gap, and wherein said magnetic field is perpendicular to an axis of rotation of said rotor.

In an alternative embodiment, the rotor is capable of rotating by interacting with a magnetic field produced by the stator upon receiving electrical energy from at least one energy storage device, said rotor separated from said stator by an air gap, and wherein said magnetic field is parallel to an axis of rotation of said rotor.

In one embodiment, the electric machine is capable of achieving a peak torque at operating current, said peak torque is at most 50 Nm both during starting of the engine and while providing power assistance to the internal combustion engine during running of the vehicle. In an alternative embodiment, the peak torque is at most 10 Nm to 30 Nm in case of three-wheeled vehicles. Similarly, the peak torque can be in the range of at most 7 Nm in case of two-wheeled vehicle, for example, motorcycles and scooter type vehicles with an engine capacity of about 110cc. In an embodiment, for higher capacity two-wheeled vehicles, for example, motorcycles of engine capacity of about 200cc, the peak torque can be at most 10Nm.

These and other advantages of the present subject matter would be described in greater detail in conjunction with the figures in the following description.

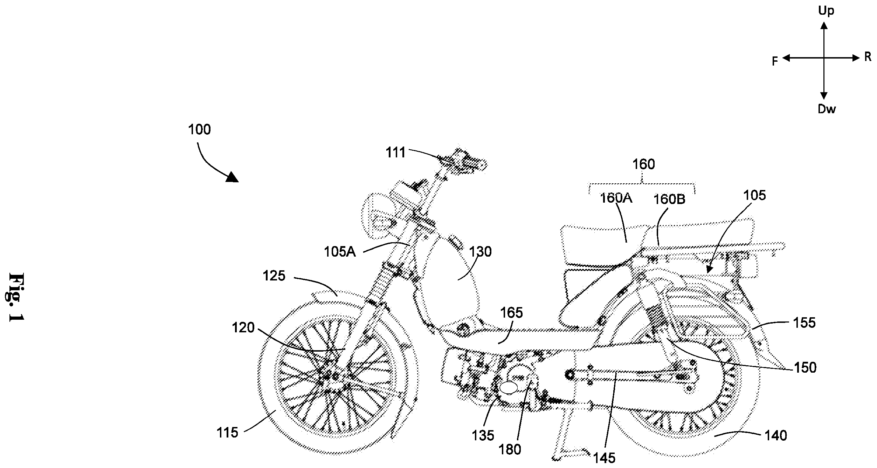

Fig. 1 illustrates a left side view of an exemplary two-wheeled vehicle, in accordance with an embodiment of present subject matter. The vehicle 100 has a frame assembly 105, which acts as the structural member and as skeleton of the vehicle 100. The frame assembly 105 includes a head tube 105A through which a steering assembly is rotatably journaled. The steering assembly includes a handle bar assembly 111 connected to a front wheel 115 through one or more front suspension(s) 120. A front fender 125 covers at least a portion of the front wheel 120. Further, the frame assembly 105 includes a main tube (not shown) extending rearwardly downward from the head tube 105A. A fuel tank 130 is mounted to the main tube 105A. Furthermore, a down tube (not shown) extends substantially horizontally rearward from a rear portion of the main tube. In addition, the frame assembly includes one or more rear tube(s) (not shown) that extends inclinedly rearward from a rear portion of the down tube. In a preferred embodiment, the frame assembly 105 is mono-tube type, which extends from a front portion F to a rear portion R of the vehicle 100.

In one embodiment, a power unit 135 is mounted to the down tube. In an embodiment, the power unit 135 includes an IC engine. The fuel tank 130 is functionally connected to the power unit 135 for supplying fuel. In a preferred embodiment, IC engine is forwardly inclined i.e. a piston axis of the engine is forwardly inclined. Further, the IC engine 135 is functionally coupled to a rear wheel 140. A swing arm 140 is swingably connected to the frame assembly 105 and the rear wheel 145 is rotatably supported by the swing arm 140. One or more rear suspension(s) 150, which are connecting the swing arm 145 at an angle, sustain both the radial and axial forces occurring due to wheel reaction. A rear fender 155 is disposed above the rear wheel 145. A seat assembly 160 is disposed at a rear portion R of the step-through portion defined by the frame assembly 105. In an embodiment, the seat assembly 160 includes a rider seat 160A, and a pillion seat 160B. Further, the pillion seat 160B is positioned above the rear wheel 145. Further, the vehicle 100 is supported by a centre stand (not shown) mounted to the frame assembly 105. A floorboard 165 is mounted to the down tube and is disposed at the step-through portion. The floorboard 165 covers at least a portion of the power unit 135. The vehicle 100 is employed with an auxiliary power unit (not shown) supported by the frame assembly 105, for example, an energy storage device such as battery. Additionally, the vehicle 100 is provided with at least one set of foot rest(s) 180 for the rider/pillion to rest their feet.

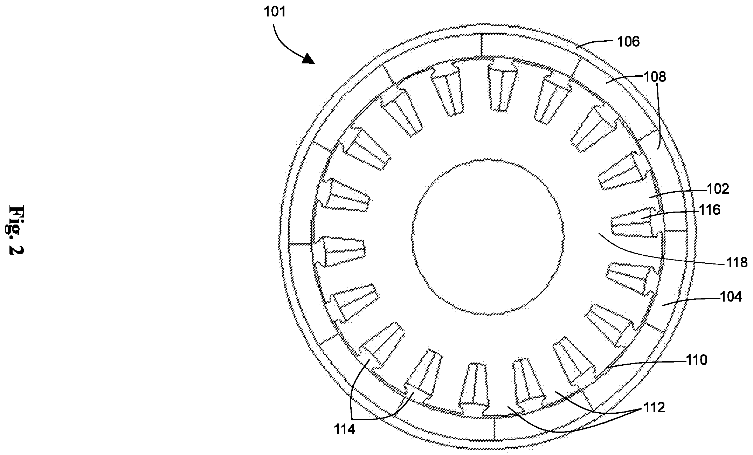

Fig.2 illustrates a cross-section of an electric machine with respect to an embodiment of the present invention. In an embodiment, the electric machine is an outer rotating BLDC machine. In an embodiment, the outer rotating BLDC machine acts as an integrated starter generator (ISG). The electric machine 101 of the present subject matter includes a rotor 104, which further includes a back iron 106 and a plurality of magnets 108 that are disposed on the inner surface of the rotor 104. In an embodiment, the back iron 106 rotates along with the rotation of the rotor 104. In an embodiment, the plurality of magnets 108 is permanent magnet.

Further, the back iron 106 can be made out of any one of iron, silicon steel, which is either made as one full block of iron or silicon steel. Alternatively, the back iron 106 is made as layers of iron or silicon steel with plurality of electrical insulation layers in between. In an embodiment, the plurality of magnets 108 can be any one of arc type magnets and flat magnets. Further, in one embodiment, the plurality of magnets 108 is disposed adjacently to each other circumferentially, without any gap. Alternatively, the plurality of magnets 108 can be disposed adjacently to each other circumferentially with circumferential air gap between two adjacent magnets of the plurality of magnets 108.

Further, the electric machine 101 includes a stator 102 having a centrally provided stator core 118 around which a plurality of stator teeth 112 are circumferentially disposed forming a plurality of stator slots 114 therebetween. In an embodiment, the plurality of stator slots 114 is further filled with plurality of winding 116. In an embodiment, the stator 102 is enclosed within the rotor 104 and radially separated by an air gap 110. In an embodiment, each tooth of the plurality of stator teeth 112 includes a stem portion. In one embodiment, the stem portion of the tooth of the plurality of stator teeth 112 is provided with equal width on both ends of the stem portion, i.e., at a first end that is towards the stator core 118 and a second end that is away from the stator core 118. In an alternative embodiment, each slot of the plurality of stator slots 114 is formed to have equal width at both ends, i.e., at an end that is closer to the stator core 118 and at an end that is away from the stator core 118, which is achieved by two adjoining tooth of the plurality of stator teeth 112 having different widths at both its ends. In another alternative embodiment, each of the tooth of the plurality of stator teeth 112 and the each of the slot of the plurality of stator slots 114 are formed in such a manner that the width of the tooth and the slot at both the ends are not equal. In one embodiment, the stem portion of the each of the tooth of the plurality of stator teeth 112 ends with a head portion facing the rotor 104, and has a width that is wider than the stem portion.

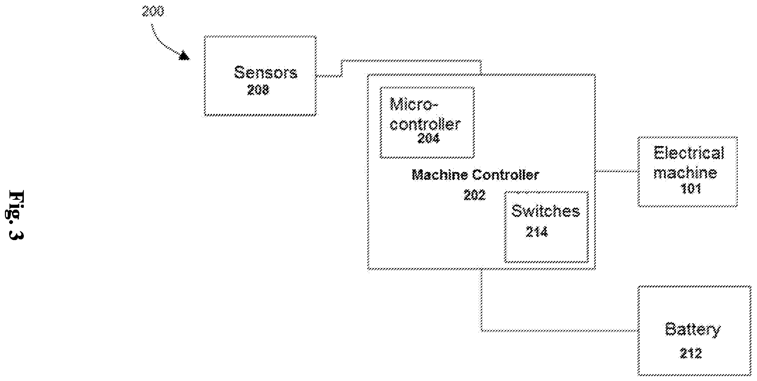

**Fig. 3** depicts a block diagram of a control system for assisting an internal combustion engine of a vehicle during starting and during high speed operations in accordance to an embodiment of the present invention. In an embodiment, the control system 200 includes a machine controller 202, which further includes at least one microcontroller 204, and a plurality of switches 214. The machine controller 202 that is powered by an energy storage device, for example, a battery 212 and is capable of receiving inputs from one or more sensors 208. Based on the inputs received from the one or more sensors 208, the machine controller 202 controls the electrical machine 101 to operate effectively both during the starting of the vehicle by providing a boost voltage to the electrical machine 101, and during running operation of the vehicle by providing a voltage from the battery 212.

In an embodiment, the microcontroller 204 is capable of processing the signals received from the one or more sensors 208 for effective starting operation of the vehicle.

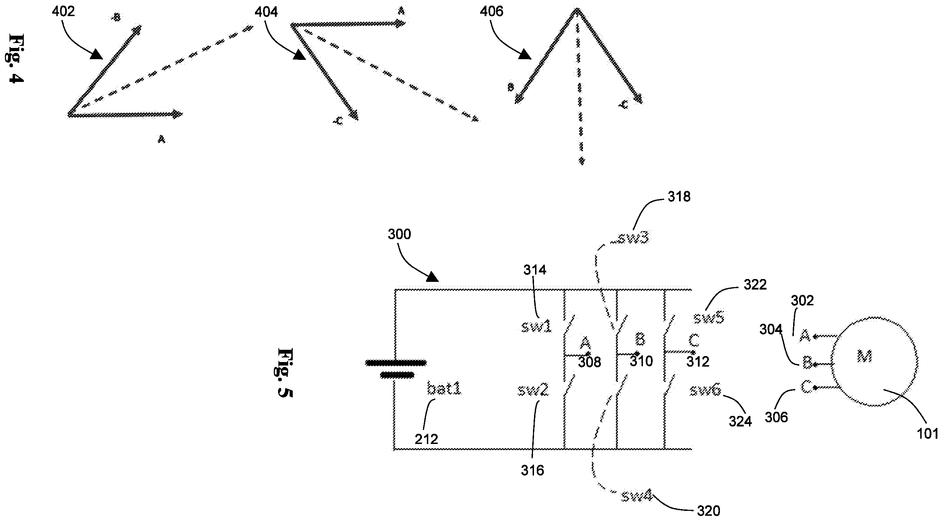

**Fig. 4** illustrates a phase diagram representation of three of the six possible states of the switches of a three-phase switching network of power electronic switches, in accordance to an embodiment of the present invention. In an embodiment, the phase diagram 402 depicts the resulting magnetic field, as represented in 2d vectors along the magnetic field due to phase A of the electric machine 101 and the magnetic field due to phase -B of the electric machine 101. In one embodiment, the phase diagram 404 depicts the resulting magnetic field, as represented in 2d vectors along the magnetic field due to phase A of the electric machine 101 and the magnetic field due to phase -C. Similarly, in an embodiment, the phase diagram 406 depicts the resulting magnetic field, as represented in 2d vectors along the magnetic field due to phase B of the electric machine 101 and the magnetic field due to phase -C of the electric machine. In an embodiment, the above mentioned three sequences AB□, AC□, and BC□ are in rotating clockwise sequence separated by 60°.

**Fig. 5** illustrates the six-switch network of power electronic switches depicted in Fig. 4, which results in switching of the three-phase electric machine depicted in Fig.2. In an embodiment, the power electronic circuitry 300 of the machine controller 202 includes a first top switch 314 and a first bottom switch 316 arranged in series forming a first junction portion 308 therebetween. The first top switch 314 is connected to the positive terminal of the battery 212, while the first bottom switch 316 is connected to the negative terminal of the battery 212. Similarly, the power electronic circuitry 300 of the machine controller 202 also includes a second and third top switches 318, 322 arranged in series to second and third bottom switches 320, 324 respectively, forming second and third junction portions 310, 312 at their corresponding intersections. The first top and bottom switches 314, 316 is arranged in parallel to the second top and bottom switches 318, 320, and the third top and bottom switches 322, 324. The first, second, and the third junction portions 308, 310, 312 are further connected to phase ends of the electrical machine 101, for example, phase ends A, B, C 302, 304, 306 of the electrical machine 101 such that the electrical connection between the machine controller 202 and the electrical machine 101 is established.

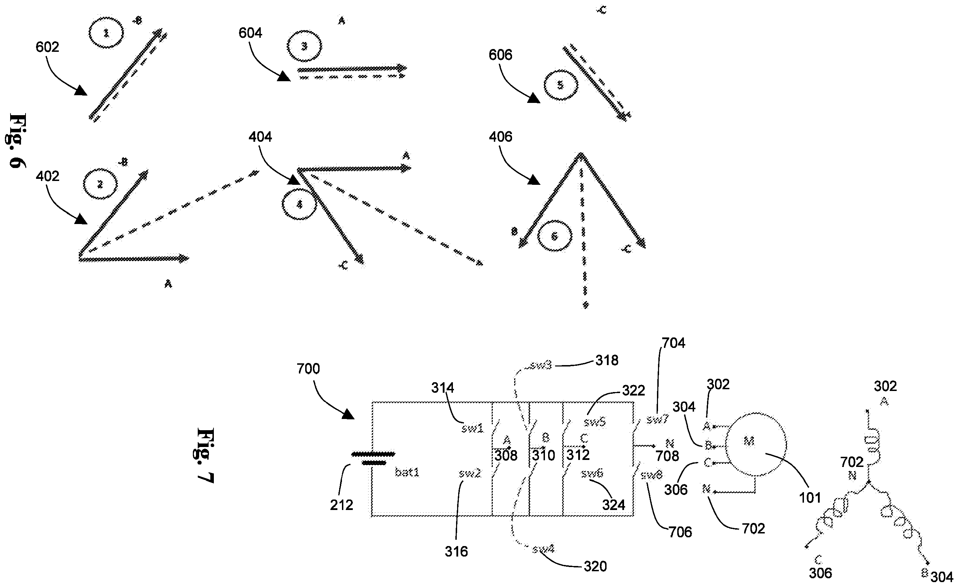

**Fig.6** provides the phase diagram representation of the six possible states of the switches of the three-phase switching network of power electronic switches, in accordance to an embodiment of the present invention. In an embodiment, the phase diagram 402 depicts the resulting magnetic field, as represented in 2d vectors along the magnetic field due to phase A of the electric machine 101 and the magnetic field due to phase -B of the electric machine 101. In one embodiment, the phase diagram 404 depicts the resulting magnetic field, as represented in 2d vectors along the magnetic field due to phase A of the electric machine 101 and the magnetic field due to phase -C. Similarly, in an embodiment, the phase diagram 406 depicts the resulting magnetic field, as represented in 2d vectors along the magnetic field due to phase B of the electric machine 101 and the magnetic field due to phase -C of the electric machine. Similarly, the present subject matter provides a phase diagram 602 in which the resulting magnetic field along the magnetic field due to phase -B of the electric machine 101. In an embodiment, the resulting magnetic field due to phase -B and the resulting magnetic field of the phase diagram 402 are in a rotating clockwise sequence separated by 30°. Similarly, the phase diagrams 604 and 606 provides the resulting magnetic field due to phase A and phase -C. Further, the resulting magnetic field due to phase A and the resulting magnetic field of the phase diagram 404 are in a rotating clockwise sequence separated by 30°, while the resulting magnetic field due to phase -C and the resulting magnetic field of the phase diagram 406 are in a rotating clockwise sequence separated by 30°.

**Fig.7** illustrates the six-switch network of power electronic switches having an additional leg of switches that is electrically connected to the neutral point of the coils of the star winding of the electric machine depicted in Fig.2. In an embodiment, the power electronic circuitry 700 of the present invention further includes a fourth top switch sw7 704 and a fourth bottom switch sw8 706 that are arranged in series forming a fourth junction portion N 708 therebetween. In an embodiment, the fourth junction portion N 708 is further connected to a phase end of the electrical machine 101, for example, neutral point N 702 of the star winding configuration of the electrical machine 101, such that when the current passes through one of the above switches through to the neutral point N 702, the resulting magnetic field is separated by 30°, thereby reducing the average

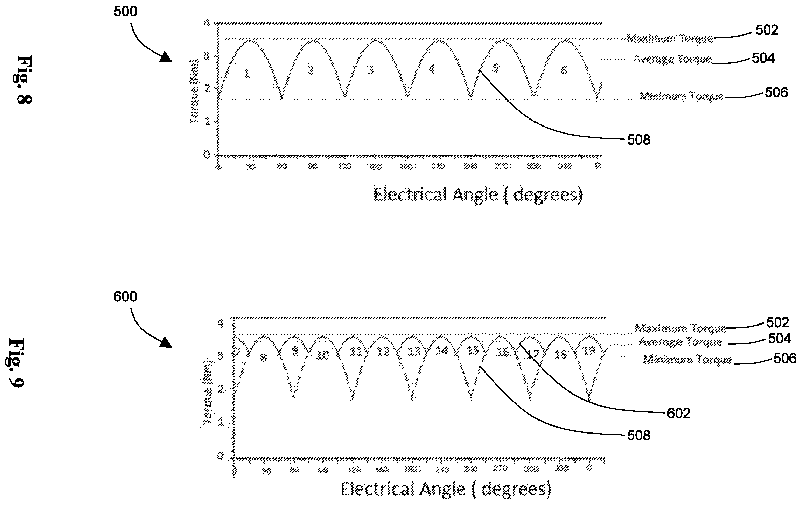

**Fig.8** depicts a torque waveform 500 of a conventional electric machine connected in accordance with the network shown in Fig. 5. In an embodiment, the rotating magnetic field is created in steps of 60° electrical angle, which results in rotor torque selected as a combination of 60° of the torque versus angle waveform, which has a peak torque resulting in six repeated torque waveforms. This will have six torque ripples within 360° electrical rotation of the rotor of the electric machine 101. The average torque of the rotor is generally the mean of the peak torque and the lowest torque of the output torque waveform. In such a case, the average torque of the rotor is lower than the peak torque, which results in machine 101 meeting only lower load torque requirements. For example, the waveform 508 includes ripple 1 that is contributed by top switch in phase A and bottom switch in phase B. Similarly, ripple 2 is contributed by top switch in phase A, bottom switch in phase C. While, ripple 3 is contributed by top switch in B phase, bottom switch in C phase. Similarly, ripple 4 is contributed by top switch in B phase, bottom switch in A phase, and ripple 5 is contributed by top switch in C phase, and bottom switch in A phase. Lastly, ripple 6 is contributed by top switch in C phase and bottom switch in B phase. The cycle repeats in this sequence.

**Fig. 9** depicts a torque waveform 600 of the inventive electric machine connected in accordance with the network depicted in Fig.7. in an embodiment, an additional switch configuration as a fourth switch configuration as shown in Fig. 7 is introduced such that the middle portion of the fourth configuration is connected to the neutral point of the star winding configuration of the machine 101. By such a configuration, the present invention achieves a possible switch configuration that can result in finer steps of less than 60° electrical angle, for instance, of 30° electrical angle of the rotating magnetic field. involves turning on the top switch of the first switch configuration and the bottom switch of the fourth switch configuration to result in a current flow through only one of the phases, for the first 30° electrical angle of the rotating magnetic field. For the next 30° electrical angle of the rotating magnetic field, the top switch of the first switch configuration and the bottom switch of the second switch configuration are turned on resulting in a current flow through two of the phases of the stator winding. Similarly, 30° angle steps of the rotating magnetic field can be achieved. By this configuration, it is possible to increase the lowest torque of the output torque waveform, which in turn increases the average torque of the rotor and still keeping the peak torque same. In such a case, with the higher average torque, it is possible for the BLDC machine 101 to meet higher load torque requirements. For instance, in an implementation, the torque waveform 602 includes ripple 7, which is contributed by top switch in N phase, bottom switch in B phase. Similarly, ripple 8 is contributed by top switch in A phase, bottom switch in B phase. The ripple 9 is contributed by top switch in A phase, bottom switch in N phase, while the ripple 10 is contributed by top switch in A phase, bottom switch in C phase. Similarly, ripple 11 is contributed by top switch in N phase, bottom switch in C phase, while the ripple 12 is contributed by top switch in B phase, bottom switch in C phase. In similar manner, the ripple 13 is contributed by top switch in B phase, bottom switch in N phase, while the ripple 14 is contributed by top switch in B phase, bottom switch in A phase. Similarly, the ripple 15 is contributed by top switch in N phase, bottom switch in A phase, while the ripple 16 is contributed by top switch in C phase, bottom switch in A phase. Lastly, the ripple 17 is contributed by top switch in C phase, bottom switch in N phase, while the ripple 18 is contributed by top switch in C phase and the bottom switch in B phase. The cycle repeats in this sequence, such that it is possible to increase the lowest torque of the output torque waveform, which in turn increases the average torque of the rotor and still keeping the peak torque same. In such a case, with the higher average torque.

## Claims

1. A control system (200) for assisting an internal combustion engine of a vehicle (100) during starting said vehicle (100) and during high speed operation and achieving higher average torque, said control system (200) having an electrical machine (101) that is compact and capable of being accommodated in a vehicle (100) and a power source, and said control system (200) capable of achieving reduction in exhaust emissions at high speed operations, said control system (200) comprising:
the electrical machine (101) of BLDC type, said electrical machine (101) including a stator (102) having a plurality of teeth (112), each tooth of said plurality of teeth (112) is wound with conducting wire to form a winding connected in a star winding configuration, said electrical machine (101) including a rotor (104) having a plurality of magnets (108) that are arranged facing the plurality of teeth (112) of said stator (102); and
a machine controller (202) including at least one microcontroller (204), wherein said machine controller (202) including a first set of switch configuration having six switches arranged in first, second, and third switch configurations, said first, second, and third switch configurations include two switches connected in series between terminals of said power source respectively, said first set includes three top switches and three bottom switches, a first junction portion of each of said two switches that are connected in series is connected to a connector end of a first phase of said star winding configuration, and a second junction portion of each of said two switches that are connected in series is connected to a connector end of a second phase of said star winding configuration, and a third junction portion of each of said two switches that are connected in series is connected to a connector end of a third phase of said star winding configuration, said machine controller (202) including a second set of switch configuration arranged in a fourth switch configuration having two switches connected in series between the terminals of said power source, said second set includes a fourth junction portion connected to a neutral point of said star winding configuration **characterised in that** the at least one microcontroller (204) causes 30° angle steps of a rotating magnetic field by turning on the first set and the second set of the switch configurations in a predetermined sequence, wherein the at least one microcontroller (204) turns on the top switch of the first switch configuration and the bottom switch of the fourth switch configuration causing a current flow through said first phase for a first 30° electrical angle of the rotating magnetic field, said at least one microcontroller (204) turns on the top switch of the first switch configuration and the bottom switch of the second switch configuration causing a current flow through said first phase and said second phase for a second 30° electrical angle of the rotating magnetic field.

2. The control system (200) as claimed in claim 1, wherein said plurality of magnets (108) of said electrical machine (101) are mounted on a surface of said rotor (104) facing said stator (102).

3. The control system (200) as claimed in claim 1, wherein said plurality of magnets (108) of said electrical machine (101) are embedded inside said rotor (104).

4. The control system (200) as claimed in claim 1, wherein said electrical machine (101) is a brushless direct current motor having said rotor (104) disposed inside said stator (102).

5. The control system (200) as claimed in claim 1, wherein said electrical machine (101) is a brushless direct current motor having said rotor (104) disposed outside said stator (102).

6. The control system (200) as claimed in claim 1, wherein said first set and said second set of switch configurations are composed of parallel combination of multiple power electronic switching circuit elements.

7. The control system (200) as claimed in claim 1, wherein said power source for supplying energy to said electrical machine (101) when said electrical machine (101) is operating as a motor, and for storing energy generated by said electrical machine (101) when said electrical machine (101) is operating as a generator.

8. The control system (200) as claimed in claim 1, wherein said control system (200) further comprises one or more sensors capable of sensing an operational position of said rotor (104).

9. The control system (200) as claimed in claim 1 or 7, wherein said rotor (104) is capable of rotating by interacting with a magnetic field produced by the stator (102) upon receiving electrical energy from at least one energy storage device, said rotor (104) separated from said stator (102) by an air gap, and said magnetic field is perpendicular to an axis of rotation of said rotor (104).

10. The control system (200) as claimed in claim 1 or 7, wherein said rotor (104) is capable of rotating by interacting with a magnetic field produced by the stator (102) upon receiving electrical energy from at least one energy storage device, said rotor (104) separated from said stator (102) by an air gap (110), and wherein said magnetic field is parallel to an axis of rotation of said rotor (104).

11. The control system (200) as claimed in claim 1, wherein the electrical machine (101) is capable of achieving a peak torque at operating current, said peak torque is in the range of 45 Nm to 50 Nm both during starting of the engine and while providing power assistance to the internal combustion engine during running of the vehicle (100).

## Patentansprüche

1. Steuerungssystem (200) zum Unterstützen eines Verbrennungsmotors eines Fahrzeugs (100) während des Startens des Fahrzeugs (100) und während des Hochgeschwindigkeitsbetriebs und zum Erzielen eines höheren durchschnittlichen Drehmoments, wobei das Steuersystem (200) eine elektrische Maschine (101), die kompakt ist und in einem Fahrzeug (100) untergebracht werden kann, und eine Energiequelle aufweist, und wobei das Steuersystem (200) in der Lage ist, eine Reduzierung der Abgasemissionen bei Hochgeschwindigkeitsbetrieb zu erreichen, wobei das Steuersystem (200) umfassend:
die elektrische Maschine (101) vom BLDC-Typ, wobei die elektrische Maschine (101) einen Stator (102) mit einer Vielzahl von Zähnen (112) aufweist, wobei jeder Zahn der Vielzahl von Zähnen (112) mit leitendem Draht gewickelt ist, um eine Wicklung zu bilden, die in einer Sternwicklungskonfiguration verbunden ist, wobei die elektrische Maschine (101) einen Rotor (104) mit einer Vielzahl von Magneten (108) aufweist, die gegenüber der Vielzahl von Zähnen (112) des Stators (102) angeordnet sind; und
eine Maschinensteuerung (202), die mindestens einen Mikrocontroller (204) enthält, wobei die Maschinensteuerung (202) einen ersten Satz von Schalterkonfigurationen mit sechs Schaltern enthält, die in ersten, zweiten und dritten Schalterkonfigurationen angeordnet sind, wobei die ersten, zweiten und dritten Schalterkonfigurationen zwei Schalter enthalten, die jeweils in Reihe zwischen Anschlüssen der Stromquelle geschaltet sind, wobei der erste Satz drei obere Schalter und drei untere Schalter enthält, ein erster Verbindungsabschnitt von jedem der zwei Schalter, die in Reihe geschaltet sind, mit einem Anschlussende einer ersten Phase der Sternwicklungskonfiguration verbunden ist, und ein zweiter Verbindungsabschnitt von jedem der zwei Schalter, die in Reihe geschaltet sind, mit einem Anschlussende einer zweiten Phase der Sternwicklungskonfiguration verbunden ist, und ein dritter Verbindungsabschnitt von jedem der zwei Schalter, die in Reihe geschaltet sind, mit einem Anschlussende einer dritten Phase der Sternwicklungskonfiguration verbunden ist, die Maschinensteuerung (202) einen zweiten Satz von Schalterkonfigurationen enthält, die in einer vierten Schalterkonfiguration angeordnet sind, bei der zwei Schalter zwischen den Anschlüssen der Stromquelle in Reihe geschaltet sind, wobei der zweite Satz einen vierten Verbindungsabschnitt enthält, der mit einem neutralen Punkt der Sternwicklungskonfiguration verbunden ist, **dadurch gekennzeichnet, dass** der mindestens eine Mikrocontroller (204) 30°-Winkelschritte eines rotierenden Magnetfeldes bewirkt, indem er den ersten Satz und den zweiten Satz der Schalterkonfigurationen in einer vorbestimmten Reihenfolge einschaltet, wobei der mindestens eine Mikrocontroller (204) den oberen Schalter der ersten Schalterkonfiguration und den unteren Schalter der vierten Schalterkonfiguration einschaltet, was einen Stromfluss durch die erste Phase für einen ersten 30° elektrischen Winkel des rotierenden Magnetfeldes bewirkt, wobei der mindestens eine Mikrocontroller (204) den oberen Schalter der ersten Schalterkonfiguration und den unteren Schalter der zweiten Schalterkonfiguration einschaltet, was einen Stromfluss durch die erste Phase und die zweite Phase für einen zweiten 30° elektrischen Winkel des rotierenden Magnetfeldes bewirkt.

2. Steuerungssystem (200) nach Anspruch 1, wobei die mehreren Magnete (108) der elektrischen Maschine (101) an einer dem Stator (102) zugewandten Oberfläche des Rotors (104) angebracht sind.

3. Steuerungssystem (200) nach Anspruch 1, wobei die mehreren Magnete (108) der elektrischen Maschine (101) in den Rotor (104) eingebettet sind.

4. Steuerungssystem (200) nach Anspruch 1, wobei die elektrische Maschine (101) ein bürstenloser Gleichstrommotor ist, bei dem der Rotor (104) innerhalb des Stators (102) angeordnet ist.

5. Steuerungssystem (200) nach Anspruch 1, wobei die elektrische Maschine (101) ein bürstenloser Gleichstrommotor ist, bei dem der Rotor (104) außerhalb des Stators (102) angeordnet ist.

6. Steuerungssystem (200) nach Anspruch 1, wobei der erste Satz und der zweite Satz von Schalterkonfigurationen aus einer Parallelkombination von mehreren leistungselektronischen Schaltkreiselementen bestehen.

7. Steuerungssystem (200) nach Anspruch 1, wobei die Energiequelle zum Zuführen von Energie zu der elektrischen Maschine (101), wenn die elektrische Maschine (101) als ein Motor arbeitet, und zum Speichern von durch die elektrische Maschine (101) erzeugter Energie, wenn die elektrische Maschine (101) als ein Generator arbeitet, dient.

8. Steuerungssystem (200) nach Anspruch 1, wobei das Steuersystem (200) ferner einen oder mehrere Sensoren umfasst, die in der Lage sind, eine Betriebsposition des Rotors (104) zu erfassen.

9. Steuerungssystem (200) nach Anspruch 1 oder 7, wobei der Rotor (104) in der Lage ist, sich durch Wechselwirkung mit einem Magnetfeld zu drehen, das durch den Stator (102) bei Empfang von elektrischer Energie von mindestens einer Energiespeichervorrichtung erzeugt wird, wobei der Rotor (104) von dem Stator (102) durch einen Luftspalt getrennt ist und das Magnetfeld senkrecht zu einer Drehachse des Rotors (104) steht.

10. Steuerungssystem (200) nach Anspruch 1 oder 7, wobei der Rotor (104) in der Lage ist, sich durch Wechselwirkung mit einem Magnetfeld zu drehen, das durch den Stator (102) beim Empfang von elektrischer Energie von mindestens einer Energiespeichervorrichtung erzeugt wird, wobei der Rotor (104) von dem Stator (102) durch einen Luftspalt (110) getrennt ist, und wobei das Magnetfeld parallel zu einer Drehachse des Rotors (104) ist.

11. Steuerungssystem (200) nach Anspruch 1, wobei die elektrische Maschine (101) in der Lage ist, ein Spitzendrehmoment bei Betriebsstrom zu erreichen, wobei das Spitzendrehmoment im Bereich von 45 Nm bis 50 Nm sowohl beim Anfahren des Motors als auch bei der Leistungsunterstützung des Verbrennungsmotors während des Betriebs des Fahrzeugs (100) liegt.

## Revendications

1. Système de commande (200) pour assister un moteur à combustion interne d'un véhicule (100) pendant le démarrage dudit véhicule (100) et pendant un fonctionnement à grande vitesse et pour obtenir un couple moyen plus élevé, ledit système de commande (200) ayant une machine électrique (101) qui est compacte et capable d'être logée dans un véhicule (100) et une source d'énergie, et ledit système de commande (200) étant capable d'obtenir une réduction des émissions d'échappement lors de fonctionnements à grande vitesse, ledit système de commande (200) comprenant :
la machine électrique (101) de type BLDC, ladite machine électrique (101) comprenant un stator (102) ayant une pluralité de dents (112), chaque dent de ladite pluralité de dents (112) est enroulée avec un fil conducteur pour former un enroulement connecté dans une configuration d'enroulement en étoile, ladite machine électrique (101) comprenant un rotor (104) ayant une pluralité d'aimants (108) qui sont disposés face à la pluralité de dents (112) dudit stator (102) ; et
un contrôleur de machine (202) comprenant au moins un microcontrôleur (204), dans lequel ledit contrôleur de machine (202) comprend un premier ensemble de configuration de commutateurs ayant six commutateurs disposés dans des première, deuxième et troisième configurations de commutateurs, lesdites première, deuxième et troisième configurations de commutateurs comprennent deux commutateurs connectés en série entre des bornes de ladite source d'alimentation respectivement, ledit premier ensemble comprend trois commutateurs supérieurs et trois commutateurs inférieurs, une première partie de jonction de chacun desdits deux commutateurs qui sont connectés en série est connectée à une extrémité de connecteur d'une première phase de ladite configuration d'enroulement en étoile, et une deuxième partie de jonction de chacun desdits deux commutateurs qui sont connectés en série est connectée à une extrémité de connecteur d'une deuxième phase de ladite configuration d'enroulement en étoile, et une troisième partie de jonction de chacun desdits deux commutateurs qui sont connectés en série est connectée à une extrémité de connecteur d'une troisième phase de ladite configuration d'enroulement en étoile, ledit contrôleur de machine (202) comprenant un deuxième ensemble de configuration de commutateur agencé dans une quatrième configuration de commutateur ayant deux commutateurs connectés en série entre les bornes de ladite source d'alimentation, ledit deuxième ensemble comprend une quatrième partie de jonction connectée à un point neutre de ladite configuration d'enroulement en étoile **caractérisé en ce que** le au moins un microcontrôleur (204) provoque des étapes d'angle de 30° d'un champ magnétique rotatif en activant le premier ensemble et le deuxième ensemble des configurations de commutateur dans une séquence prédéterminée, dans lequel le au moins un microcontrôleur (204) active le commutateur supérieur de la première configuration de commutateur et le commutateur inférieur de la quatrième configuration de commutateur provoquant une circulation de courant à travers ladite première phase pour un premier angle électrique de 30° du champ magnétique tournant, ledit au moins un microcontrôleur (204) active le commutateur supérieur de la première configuration de commutateur et le commutateur inférieur de la deuxième configuration de commutateur provoquant une circulation de courant à travers ladite première phase et ladite deuxième phase pour un deuxième angle électrique de 30° du champ magnétique tournant.

2. Système de commande (200) selon la revendication 1, dans lequel ladite pluralité d'aimants (108) de ladite machine électrique (101) sont montés sur une surface dudit rotor (104) faisant face audit stator (102).

3. Système de commande (200) selon la revendication 1, dans lequel ladite pluralité d'aimants (108) de ladite machine électrique (101) sont encastrés à l'intérieur dudit rotor (104).

4. Système de commande (200) selon la revendication 1, dans lequel ladite machine électrique (101) est un moteur à courant continu sans balai ayant ledit rotor (104) disposé à l'intérieur dudit stator (102).

5. Système de commande (200) selon la revendication 1, dans lequel ladite machine électrique (101) est un moteur à courant continu sans balais ayant ledit rotor (104) disposé à l'extérieur dudit stator (102).

6. Système de commande (200) selon la revendication 1, dans lequel ledit premier ensemble et ledit second ensemble de configurations de commutation sont composés d'une combinaison parallèle de multiples éléments de circuit de commutation électronique de puissance.

7. Système de commande (200) selon la revendication 1, dans lequel ladite source d'énergie pour fournir de l'énergie à ladite machine électrique (101) lorsque ladite machine électrique (101) fonctionne comme un moteur, et pour stocker l'énergie générée par ladite machine électrique (101) lorsque ladite machine électrique (101) fonctionne comme un générateur.

8. Système de commande (200) selon la revendication 1, dans lequel ledit système de commande (200) comprend en outre un ou plusieurs capteurs capables de détecter une position opérationnelle dudit rotor (104).

9. Système de commande (200) selon la revendication 1 ou 7, dans lequel ledit rotor (104) est capable de tourner en interagissant avec un champ magnétique produit par le stator (102) lors de la réception d'énergie électrique provenant d'au moins un dispositif de stockage d'énergie, ledit rotor (104) étant séparé dudit stator (102) par un entrefer, et ledit champ magnétique est perpendiculaire à un axe de rotation dudit rotor (104).

10. Système de commande (200) selon la revendication 1 ou 7, dans lequel ledit rotor (104) est capable de tourner en interagissant avec un champ magnétique produit par le stator (102) lors de la réception d'énergie électrique depuis au moins un dispositif de stockage d'énergie, ledit rotor (104) étant séparé dudit stator (102) par un entrefer (110), et dans lequel ledit champ magnétique est parallèle à un axe de rotation dudit rotor (104). (104).

11. Système de commande (200) selon la revendication 1, dans lequel la machine électrique (101) est capable d'atteindre un couple de pointe au courant de fonctionnement, ledit couple de pointe est dans la gamme de 45 Nm à 50 Nm à la fois pendant le démarrage du moteur et pendant la fourniture d'une assistance au moteur à combustion interne pendant le fonctionnement du véhicule (100).
